**Europäisches Patentamt**

**European Patent Office**

**Office européen des brevets**

(19)

(11) Numéro de publication: **0 099 838**

**A1**

(12) # DEMANDE DE BREVET EUROPEEN

(21) Numéro de dépôt: **83420087.5**

(22) Date de dépôt: **25.05.83**

(51) Int. Cl.³: **A 01 K 47/04**

(30) Priorité: **05.07.82 FR 8212038**

(43) Date de publication de la demande:
**01.02.84 Bulletin 84/5**

(84) Etats contractants désignés:
**AT BE CH DE GB IT LI LU NL SE**

(71) Demandeur: **Nicot, Christian**

**Maisod Jura(FR)**

(72) Inventeur: **Nicot, Christian**

**Maisod Jura(FR)**

(74) Mandataire: **Maureau, Philippe**
**Cabinet Germain & Maureau Le Britannia - Tour C 20,**
**bld Eugène Déruelle**
**F-69392 Lyon Cédex 03(FR)**

(54) **Cadre de ruche d'apiculture.**

(57) Ce cadre est du type comprenant des montants périphériques (15) et une paroi centrale (16) alvéolée sur ses deux faces, formés par une même pièce de matière synthétique.

Selon l'invention chaque alvéole (18) possède une profondeur importante par rapport à son diamètre.

FIG.7

EP 0 099 838 A1

Croydon Printing Company Ltd.

1

## "Cadre de ruche d'apiculture"

La présente invention a pour objet un cadre de ruche d'apiculture.

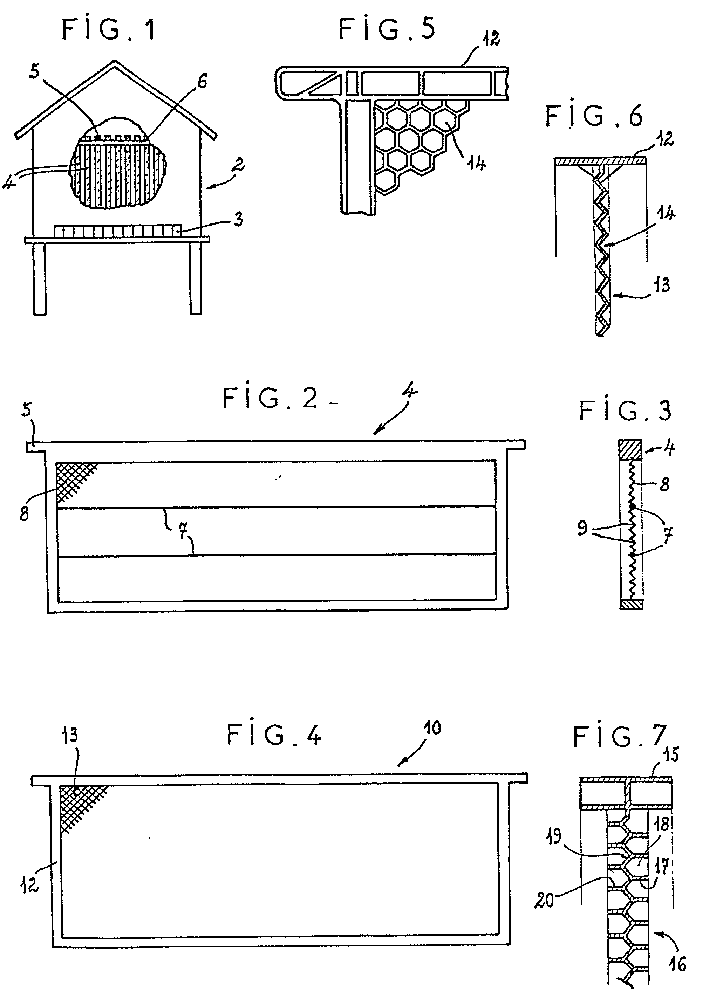

Comme montré à la figure 1 du dessin annexé, une ruche est généralement constituée par une caisse (2) de forme parallèlépipédique, servant de logement aux abeilles, présentant des ouvertures (3) sur l'une de ses faces, permettant la circulation de celles-ci.

Une ruche contient des cadres (4) ou rayons sur lesquels les abeilles déposent le miel. Ces cadres sont par exemple disposés verticalement et comportent, à cet effet, deux parties (5) en débord, venant en appui sur deux feuillures (6) ménagées sur les faces internes de la ruche.

La solution la plus ancienne consiste à réaliser un cadre (4), représenté en plan à la figure 2 et en coupe transversale à la figure 3, comprenant des montants délimitant une ouverture à l'intérieur de laquelle est tenue, à l'aide de fils de fer (7), une feuille (8) de cire d'abeilles, gaufrée sur ses deux faces par passage sur des cylindres. Le gaufrage ménage des alvéoles (9) sur les deux faces de la feuille (8). Les abeilles commencent tout d'abord à approfondir les alvéoles par un apport de cire et par étirage de la feuille, avant de déposer le miel dans le fond de celles-ci.

L'extraction des miels liquides se fait par centrifugation. Néanmoins, cette opération est longue du fait qu'il est impossible de travailler à des grandes vitesses de centrifugation, en raison du risque de bris des feuilles de cire du cadre.

En outre, il est impossible d'extraire les miels cristallisés, et il convient d'utiliser des picoteuses pour l'extraction des miels visqueux. Il faut noter que le réchauffement du miel avant l'extraction est impossible, compte tenu de la nature des matériaux constituant le cadre.

Après quelques utilisations, les feuilles équipant les cadres sont démontées en vue d'un recyclage de la cire par fonte à 60° avant laminage. Cette solution présente l'inconvénient d'être onéreuse du fait du traitement que doit subir la cire, et n'est pas satisfaisante d'un point de vue hygiénique, puisque certains microbes ne sont pas détruits. En ce qui concerne les montants des cadres, ils présentent l'inconvénient, en période de stockage, de pouvoir être détériorés par des insectes, tels que fausse-teigne.

Pour remédier à ces inconvénients, il a été imaginé de réaliser des cadres entièrement en matière synthétique reprenant les caractéristiques de forme des cadres décrits précédemment.

Un tel cadre (10) en matière synthétique est représenté aux figures 4 et 6 du dessin. Dans ce cadre, les montants (12) et la plaque centrale (13) sont constitués par une même pièce de matière synthétique.

La feuille présente, dans ses deux faces, des alvéoles (14) en forme de tronc de pyramide. Compte tenu de la très faible profondeur des alvéoles, il convient d'effectuer, avant utilisation d'un tel cadre, sur chaque face de la feuille centrale (12), un dépôt de cire permettant aux abeilles, par déformation de cette cire, et par apport de la cire qu'elles secrètent d'approfondir les alvéoles avant de réaliser un dépôt de miel dans celles-ci.

Néanmoins, il se produit fréquemment des constructions parasites des alvéoles, notamment dans le cas où les conditions climatiques sont défavorables, et où l'apport de cire par les abeilles est faible.

Cette solution présente l'inconvénient de ne pas permettre de disposer de cadres prêts à l'emploi puisqu'il faut réaliser un apport de cire, et de ne pas assurer la réalisation parfaite des alvéoles par les abeilles. En outre, compte-tenu de la présence d'une quantité suffisament importante de cire sur les deux faces du cadre, il n'est pas possible de réaliser l'extraction du miel à des vitesses de centrifugation élevées.

La présente invention vise à remédier à ces inconvénients.

A cet effet, dans le cadre qu'elle concerne, du type comprenant des montants périphériques et une paroi centrale alvéolée sur ses deux faces, formés par une même pièce de matière synthétique, chaque alvéole possède une profondeur importante par rapport à son diamètre.

Selon une forme d'exécution de ce cadre, chaque alvéole possède une profondeur supérieure à son diamètre maximal. Compte tenu de la profondeur importante des alvéoles, il n'est pas nécessaire de déposer de la cire sur les deux faces de la paroi centrale de chaque cadre, les abeilles pouvant tout de suite stocker du miel dans les alvéoles.

L'apiculteur peut donc vendre sa cire d'opercule et n'a plus d'achat de cire gaufrée à faire. Les cadres usagés sont nettoyés par pulvérisation d'eau chaude additionnée d'un désinfectant, et réutilisé tels quels, sans risque de détérioration pendant la période de stockage.

L'extraction du miel est extrêmement rapide puisque les risques de bris du cadre étant restreints, il est possible de travailler avec des vitesses de centrifugation importantes. Compte tenu de la profondeur des alvéoles, et de la possibilité de stockage immédiat du miel dans celles-ci, les abeilles ne peuvent pas réaliser de constructions parasites, comme tel est le cas traditionnellement.

Avantageusement, chaque alvéole presente une partie en forme de tronc de pyramide dont le sommet est tourné du côté de la paroi centrale, prolongée vers l'extérieur par une partie tubulaire de section constante. La forme en tronc de pyramide permet l'imbrication des fonds des alvéoles situées de part et d'autre de la plaque.

En outre, l'axe de chaque alvéole est perpendiculaire au plan de la paroi centrale du cadre, à la différence des alvéoles réalisées par les abeilles dans les plaques de cire, qui sont inclinées. L'orientation des alvéoles perpendiculairement au plan de la paroi centrale est avantageuse du fait qu'elle participe à éviter les constructions parasites.

La figure 7 du dessin schématique annexé représente une vue en coupe transversale de ce cadre, sachant que celui-ci présente, vu en plan, sensiblement le même aspect que le cadre représenté aux figures 4 et 5.

Comme montré à la figure 7, le cadre comprend des montants périphériques (15), et une paroi centrale (16) dont font saillie un certain nombre de nervures (17) délimitant des alvéoles (18). Chaque alvéole (18) possède, du côté de la paroi (16), une partie (19) en forme de tronc de pyramide, prolongée vers l'extérieur par une partie tubulaire (20) de section constante.

Il ressort clairement du dessin que la profondeur de chaque alvéole (18) étant importante par rapport à son diamètre, les abeilles peuvent directement déposer du miel dans celle-ci, sans qu'il soit nécessaire de faire un apport quelconque de cire.

Compte tenu de la nature des matériaux utilisés, la largeur des montants peut être réduite, ce qui permet d'augmenter la surface utile du cadre par rapport au cas où celui-ci est réalisé à partir de cire gaufrée.

Comme il va de soi, l'invention ne se limite pas à la seule forme d'exécution de ce cadre, décrite ci-dessus à titre d'exemple ; elle en embrasse, au contraire, toutes les variantes de réalisation.

C'est ainsi que la taille des cadres et les rapports dimensionnels de ceux-ci ne sont pas limités aux valeurs ressortant de la description précédente et du dessin ci-annexé, ou que le fond des alvéoles pourrait être non pas en forme de tronc de pyramide, mais en forme de calotte sphérique, sans que l'on sorte pour autant du cadre de l'invention.

4

## REVENDICATIONS

1. - Cadre de ruche d'apiculture, du type comprenant des montants périphériques (15) et une paroi centrale (16) alvéolée sur ses deux faces, formés par une même pièce de matière synthétique, caractérisé en ce que chaque alvéole (18) possède une profondeur importante par rapport à son diamètre.

2. - Cadre selon la revendication 1, caractérisé en ce que chaque alvéole (18) possède une profondeur supérieure à son diamètre maximal.

3. - Cadre selon l'une quelconque des revendications 1 et 2, caractérisé en ce que chaque alvéole (18) présente une partie (19) en forme de tronc de pyramide dont le sommet est tourné du côté de la paroi centrale ou en forme de calotte sphérique, prolongée vers l'extérieur par une partie tubulaire (20) de section constante.

4. - Cadre selon la revendication 3, caractérisé en ce que l'axe de chaque alvéole (18) est perpendiculaire au plan de la paroi centrale (16).

0099838

FİG.1

FİG.5

FİG.6

FİG.2

FİG.3

FİG.4

FİG.7

**RAPPORT DE RECHERCHE EUROPEENNE**

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,A | GB-A-1 019 856 (A.R. ELLIS et al.)<br>* Page 1, ligne 67 - page 3, ligne 42; figure 3 * | 1,2,4 | A 01 K 47/04 |
| A | FR-A-2 322 537 (M. SCHMIDT)<br>* Page 7, lignes 20-39; figure 1 * | 1,3,4 | |

**DOMAINES TECHNIQUES RECHERCHES (Int. Cl. ³)**

A 01 K 47/00

Le présent rapport de recherche a été établi pour toutes les revendications

| Lieu de la recherche | Date d'achèvement de la recherche | Examinateur |
|---|---|---|
| BERLIN | 29-09-1983 | BERGZOLL M C |